# EUROPEAN PATENT SPECIFICATION

(11) **EP 4 156 502 B1**
(45) Date of publication and mention of the grant of the patent: **14.05.2025**
(21) Application number: 20936895.0
(22) Date of filing: 21.05.2020
(51) Int. Cl.: H02K 11/27, H02P 29/02, H02P 29/024, B62D 5/04, H02H 7/08

(54) **ELECTRIC MOTOR CONTROL APPARATUS AND ELECTRIC POWER STEERING APPARATUS**
ELEKTROMOTORSTEUERUNGSVORRICHTUNG UND ELEKTRISCHE SERVOLENKVORRICHTUNG
DISPOSITIF DE COMMANDE DE MOTEUR ÉLECTRIQUE ET DISPOSITIF DE DIRECTION ASSISTÉE ÉLECTRIQUE

(43) Date of publication of application: 29.03.2023
(73) Proprietor: MITSUBISHI ELECTRIC CORPORATION, Chiyoda-ku Tokyo 100-8310 (JP)
(72) Inventor: NAGASHIMA, Tomohiko, Tokyo 100-8310 (JP)
(74) Representative: Hoffmann Eitle
(86) International application number: PCT/JP2020/020050
(87) International publication number: WO 2021/234889

(56) References cited:
- JP-A- 2002 067 988
- JP-A- 2002 354 871
- JP-A- 2008 168 728
- JP-A- 2009 278 729
- JP-A- 2011 109 779
- JP-A- 2018 098 861
- JP-A- H0 924 845
- JP-A- H0 924 845
- US-A1- 2011 115 289
- US-A1- 2018 337 624

## Description

### Technical Field

The present disclosure relates to a motor control apparatus and an electric power steering apparatus.

### Background Art

In a conventional electric-power-steering motor control apparatus, a motor control circuit of a motor control unit transmits a control signal to a motor driving unit; in according with the control signal, the motor control unit supplies a motor with a current. In this case, there is provided an interlock circuit for cutting off the connection between the motor control circuit and the motor driving unit in the case where an abnormal state in each of the motor driving unit and the motor control circuit is monitored and any abnormality is detected. The motor control unit includes the motor control circuit and the interlock circuit. The motor control apparatus includes the motor control unit and the motor driving unit. The interlock circuit is provided independently from the motor control circuit. The motor control circuit receives a signal from the interlock circuit and then cuts off the connection between the motor control circuit and the motor driving unit (e.g., refer to JP H01-257 675 A).

Relevant motor control devices are also known from US 2018/0 337 624 A1, JP H09-024 845 A and US 2011/0 115 289 A1.

### Summary of Invention

### Technical Problem

In a conventional motor control apparatus, there is provided an interlock circuit for cutting off the connection between the motor control circuit and the motor driving unit in the case where an abnormal state in each of the motor driving unit and the motor control circuit is monitored and any abnormality is determined. There has been a problem that because in order to provide such an interlock circuit independently from the motor control circuit, a monitoring circuit and a cutoff circuit are provided, the respective circuits of the motor control unit and the motor driving unit become complicated and large-scaled, which results in upsizing of the motor control apparatus and increase in the weight and the cost thereof.

The objective of a technology according to the present disclosure is to obtain a motor control apparatus that requires no complicated and large-scaled circuit, that determines whether or not any one of the motor driving unit and the motor control circuit is abnormal, based on the output of the motor control unit, and that can cut off the connection between the motor control circuit and the motor driving unit, when an abnormality is determined.

In addition, the objective thereof is to obtain an electric power steering apparatus that requires no complicated and large-scaled circuit, that determines whether or not any one of the motor driving unit and the motor control circuit is abnormal, and that can cut off the motor driving unit, when an abnormality is determined.

### Solution to Problem

The subject-matter of claim 1 solves the technical problem. The dependent claims describe further preferred embodiments, and this description discloses how the present invention may be carried out.

### Advantage of Invention

Neither a motor control apparatus nor an electric power steering apparatus according to the present disclosure requires a large-scaled circuit such as an interlock circuit and can determine an abnormality from an output of a motor control unit and can cut off the connection between the motor control unit and a motor driving unit, when an abnormality is determined. As a result, it is made possible to obtain an apparatus having an effective cutoff circuit, while suppressing the motor control apparatus from being upsized, increasing its weight, and increasing its cost.

### Brief Description of Drawings

FIG. 1 is a configuration diagram of a motor control apparatus according to Embodiment 1;
FIG. 2 is a hardware configuration diagram of the motor control apparatus according to Embodiment 1;
FIG. 3 is a flowchart of main processing by a cutoff apparatus in the motor control apparatus according to Embodiment 1;
FIG. 4 is a flowchart of initialization processing by the cutoff apparatus in the motor control apparatus according to Embodiment 1;
FIG. 5 is a flowchart of short-circuit determination processing and wrong-output determination processing by the cutoff apparatus in the motor control apparatus according to Embodiment 1;
FIG. 6 is a flowchart of excess-current determination processing by the cutoff apparatus in the motor control apparatus according to Embodiment 1;
FIG. 7 is a flowchart of cutoff processing by the cutoff apparatus in the motor control apparatus according to Embodiment 1;
FIG. 8 is a configuration diagram of a motor control apparatus according to Embodiment 2;
FIG. 9 is a flowchart of main processing by a cutoff apparatus in the motor control apparatus according to Embodiment 2;
FIG. 10 is a flowchart of short-circuit determination processing and wrong-output determination processing by the cutoff apparatus in the motor control apparatus according to Embodiment 2;
FIG. 11 is a hardware configuration diagram of a motor control apparatus according to Embodiment 3;
FIG. 12 is a configuration diagram of an electric power steering apparatus according to Embodiment 4; and
FIG. 13 is a hardware configuration diagram of a motor control apparatus according to a conventional example.

### Description of Embodiments

Hereinafter, a motor control apparatus and an electric power steering apparatus according to the present disclosure will be explained with reference to the drawings.

### 1. Embodiment 1

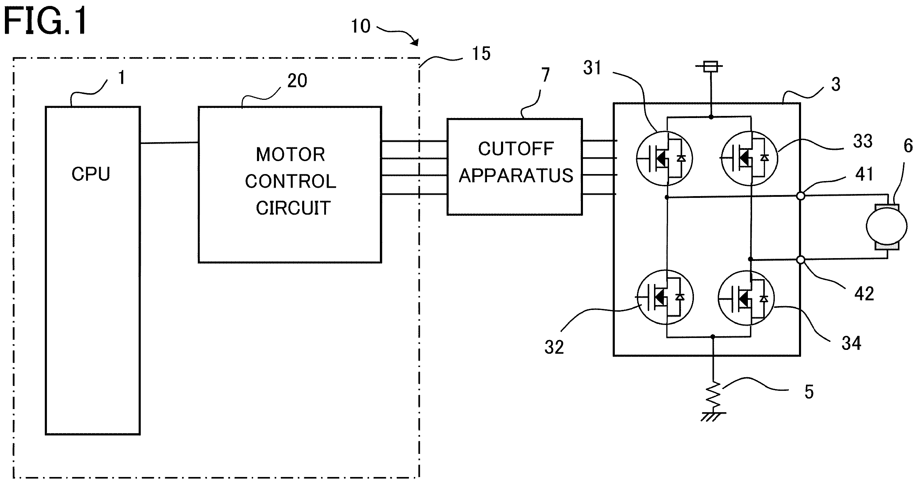

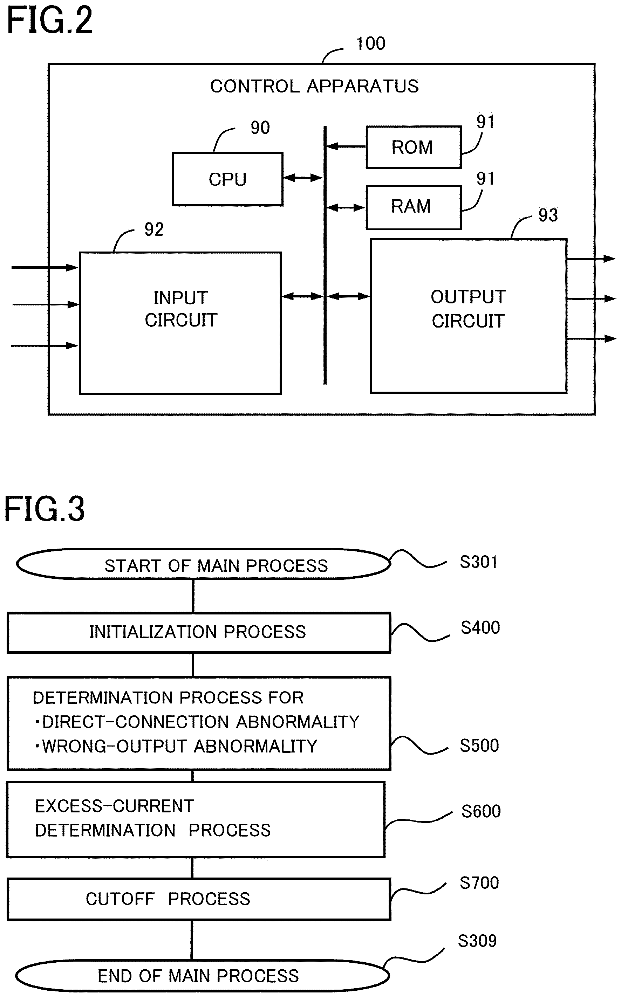

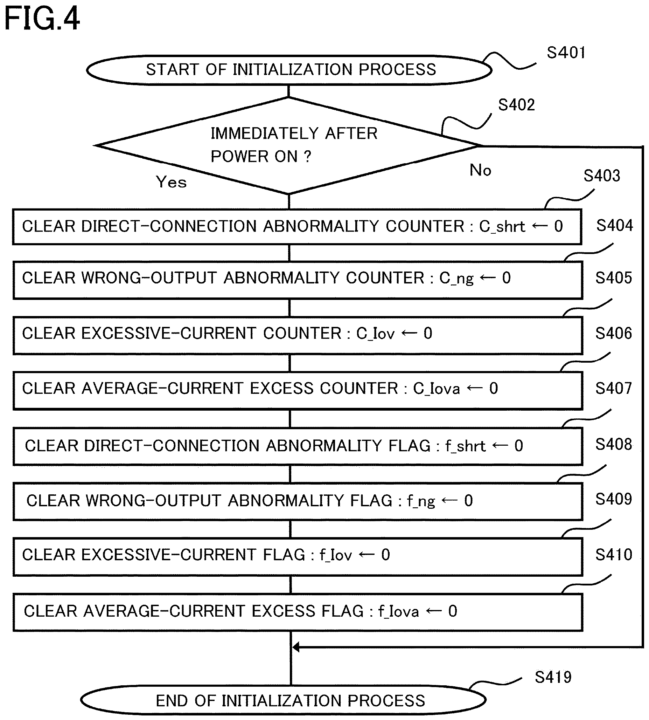

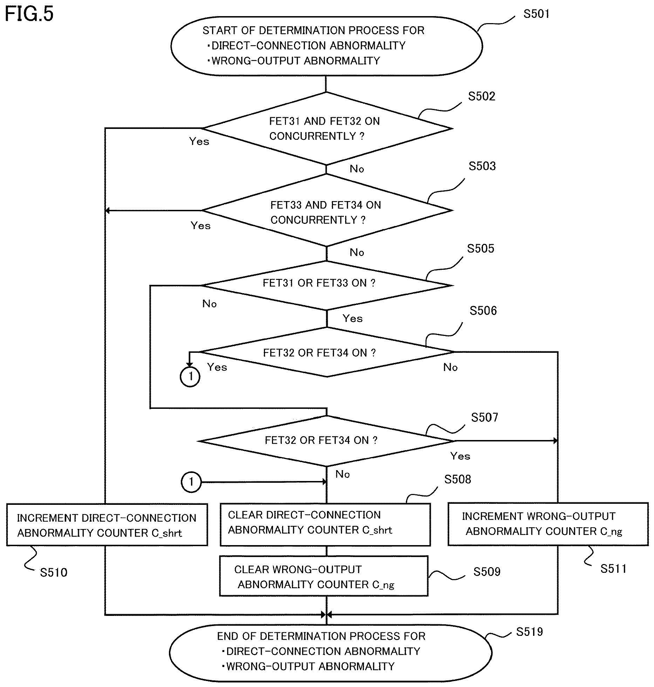

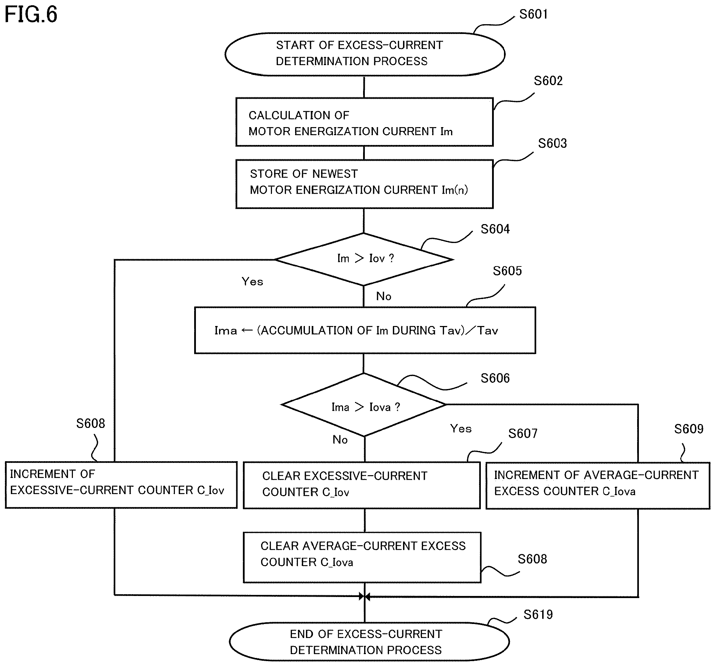

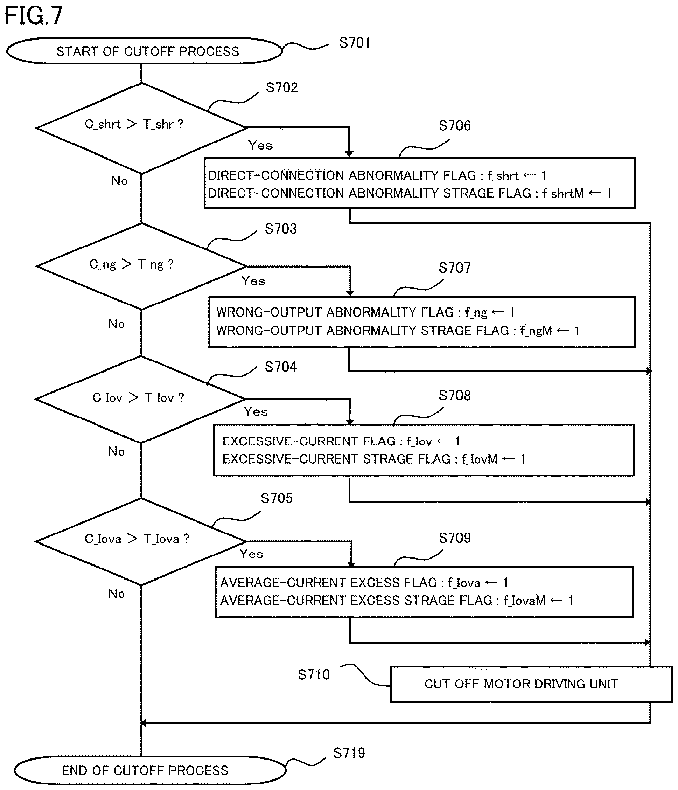

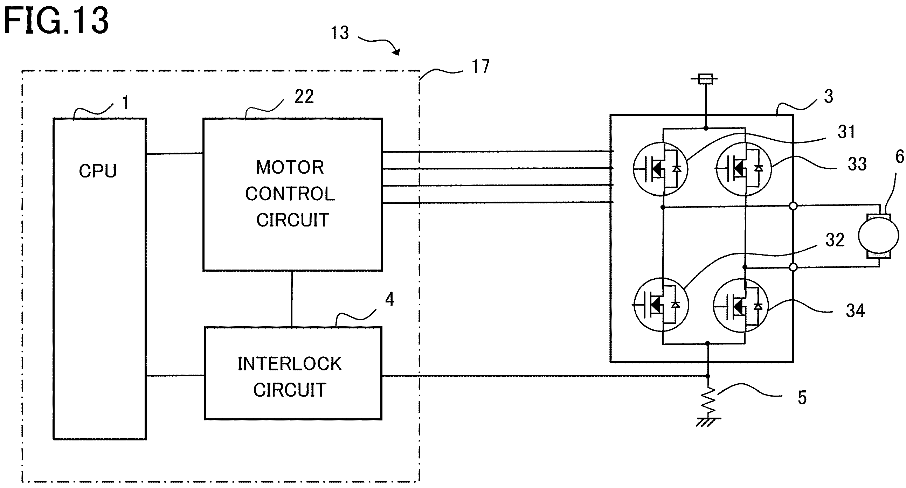

Hereinafter, a motor control apparatus 10 according to Embodiment 1 will be explained with reference to the drawings. FIG. 1 is a configuration diagram of the motor control apparatus 10 according to Embodiment 1. FIG. 2 is a hardware configuration diagram of the motor control apparatus 10 according to Embodiment 1. FIG. 3 is a flowchart of main processing by a cutoff apparatus 7 in the motor control apparatus 10 according to Embodiment 1. FIG. 4 is a flowchart of initialization processing by the cutoff apparatus 7 in the motor control apparatus 10 according to Embodiment 1. FIG. 5 is a flowchart of short-circuit determination processing and wrong-output determination processing by the cutoff apparatus 7 in the motor control apparatus 10 according to Embodiment 1. FIG. 6 is a flowchart of excess-current determination processing by the cutoff apparatus 7 in the motor control apparatus 10 according to Embodiment 1. FIG. 7 is a flowchart of cutoff processing by the cutoff apparatus 7 in the motor control apparatus 10 according to Embodiment 1. FIG. 13 is a configuration diagram of a motor control apparatus 13 according to a conventional example.

### <Conventional Example>

The motor control apparatus 13 according to a conventional example includes a motor driving unit 3 and a motor control unit 17 having a computing processing unit 1, a motor control circuit 22, and an interlock circuit 4. An input signal from the outside is inputted to the computing processing unit 1 (unillustrated). Based on the input signal, the computing processing unit 1 calculates a current to be supplied to a motor 6, outputs a command to a motor control circuit 22, and then outputs a control signal to the motor driving unit 3 by way of the motor control circuit 22. In accordance with the control signal received from the motor control circuit 22, the motor driving unit 3 supplied a current to the motor 6 through motor connection terminals 41 and 42.

The motor driving unit 3 in FIG. 13 incorporates positive-polarity field-effect transistors 31 and 33 (hereinafter, referred to as positive-polarity FETs 31 and 33) and negative-polarity FETs 32 and 34. The positive-polarity FET 31 and the negative-polarity FET 32 are connected in series with each other between a positive-polarity power source and a negative-polarity power source; the connection point is connected with the motor connection terminal 41. The positive-polarity FET 33 and the negative-polarity FET 34 are connected in series with each other between the positive-polarity power source and the negative-polarity power source; the connection point is connected with the motor connection terminal 42. The motor connection terminals 41 and 42 are connected with the motor 6**.** The motor driving unit 3 is connected with the positive-polarity power source and the negative-polarity power source; however, the negative-polarity power source is connected with the motor driving unit 3 through a resistor of a current detection circuit.

When supplying a current so as to drive the motor 6, the motor driving unit 3 turns on the positive-polarity FET 31, turns off the negative-polarity FET 32, turns off the positive-polarity FET 33, and turns on the negative-polarity FET 34 so as to pour the current into the motor 6 through the motor connection terminal 41 and to suck the current out of the motor through the motor connection terminal 42. Alternatively, the motor driving unit 3 turns off the positive-polarity FET 31, turns on the negative-polarity FET 32, turns on the positive-polarity FET 33, and turns off the negative-polarity FET 34 so as to pour the current into the motor 6 through the motor connection terminal 42 and to suck the current out of the motor through the motor connection terminal 41. Accordingly, there exists neither the case where both the positive-polarity FET 31 and the positive-polarity FET 33 are regularly and concurrently turned on nor the case where both the negative-polarity FET 32 and the negative-polarity FET 34 are regularly and concurrently turned on. It can be determined that such an output is wrong and abnormal.

In parallel with the motor control circuit 22, the interlock circuit 4 receives the contents of a command that is issued to the motor control circuit 22 by the computing processing unit 1. In the case where the contents of the command are wrong, the interlock circuit 4 determines an abnormality and then outputs a cutoff signal to the motor control circuit 22. For example, in the case where the computing processing unit 1 outputs a command for concurrently turning on the positive-polarity FET 31 and the positive-polarity FET 33 of the motor driving unit 3 or in the case where the computing processing unit 1 outputs a command for concurrently turning on the negative-polarity FET 32 and the negative-polarity FET 34 of the motor driving unit 3, the interlock circuit 4 determines that the command of the computing processing unit 1 is wrong. In this case, the interlock circuit 4 outputs the cutoff signal to the motor control circuit 22 so as to disconnect the motor control unit 17 from the motor driving unit 3.

In addition, even when the computing processing unit 1 outputs a correct signal for driving the motor 6, the interlock circuit 4 determines whether or not the current flowing in the motor driving unit 3 corresponds to an excessive current, based on an output voltage of a current detection circuit 5. In the case where the output voltage of the current detection circuit 5 exceeds an excessive-current determination voltage, the interlock circuit 4 determines that an excessive current is flowing in the motor driving unit 3 and then outputs the cutoff signal to the motor control circuit 22.

In such a manner as described above, the interlock circuit 4 can determine an abnormality in the motor control apparatus 13 independently from the motor control circuit 22, can output the cutoff signal to the motor control circuit 22, and can disconnect the motor control unit 17 from the motor driving unit 3. As a result, the motor driving unit 3 and the motor 6 can be prevented from failing and deteriorating.

However, in order to monitor whether or not the command outputted to the motor control circuit 22 by the computing processing unit 1 is wrong, the interlock circuit 4 requires a circuit configuration for separately receiving a command value from the computing processing unit 1. Moreover, in order to monitor an excessive current in the motor driving unit 3, it is required to provide the current detection circuit 5, a wiring lead from the current detection circuit 5, and a comparison circuit for a detection value. Furthermore, it is required to provide a cutoff circuit for transfer the cutoff signal from the interlock circuit 4 to the motor control circuit 22 and for cutting off the connection between the motor control circuit 22 and the motor driving unit 3.

Therefore, providing the interlock circuit 4 poses a problem that because in order to provide the interlock circuit 4 independently from the motor control circuit 22, a monitoring circuit and a cutoff circuit are provided, the respective circuits of the motor control unit 17 and the motor driving unit 3 become complicated and large-scaled, which results in upsizing of the motor control apparatus 13 and increase in the weight and the cost thereof.

### <Embodiment 1>

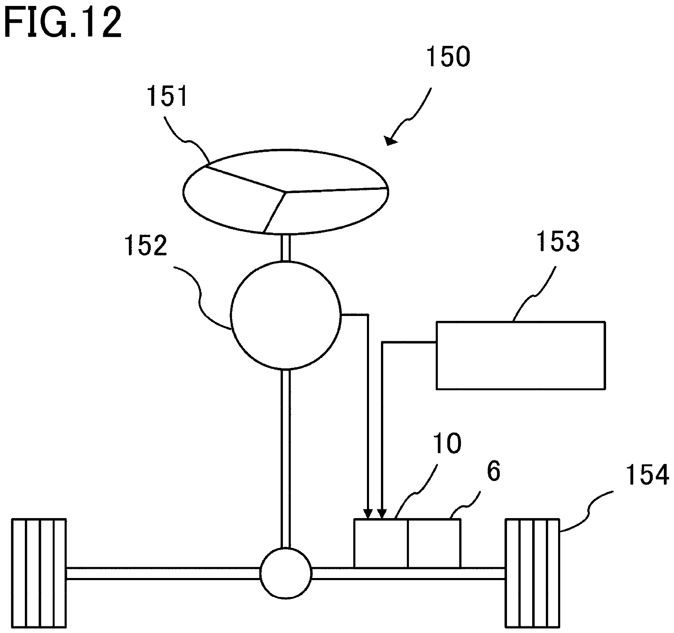

FIG. 1 is a configuration diagram of the motor control apparatus 10 according to Embodiment 1. The motor control apparatus 10 in FIG. 1 includes a motor control unit 15 having the computing processing unit 1 and a motor control circuit 20, the cutoff apparatus 7, and the motor driving unit 3. The motor control apparatus 10 in FIG. 1 is different from the conventional example in FIG. 12 in that there exists no interlock circuit 4 and in that the cutoff apparatus 7 is inserted between the motor control circuit 20 and the motor driving unit 3.

An input signal from the outside is inputted to the computing processing unit 1 (unillustrated). Based on the input signal, the computing processing unit 1 calculates a current to be supplied to the motor 6, outputs a command to the motor control circuit 20, and then outputs a control signal to the motor driving unit 3 by way of the motor control circuit 20. The motor control circuit 20 transfers a control signal to the motor driving unit 3 by way of the cutoff apparatus 7. In accordance with the control signal received from the motor control circuit 20, the motor driving unit 3 supplied a current to the motor 6 through the motor connection terminals 41 and 42.

The motor driving unit 3 in FIG. 1 is the same as the motor driving unit 3 according to the conventional example in FIG. 13. The cutoff apparatus 7 receives the output of the motor control circuit 20; in the case where no abnormality exists, the output is directly transferred to the motor driving unit 3. In the case where any abnormality exists in the output of the motor control circuit 20, the cutoff apparatus 7 cuts off the output of the motor control circuit 20 and does not transfer the output to the motor driving unit 3. In addition, it may be allowed that the input and the output of the cutoff apparatus 7 are connected with each other through an electronic component, such as an FET, a bipolar transistor, a thyristor, or an IC (Integrated Circuit), included in a semiconductor switch and that in the case where the cutoff is required, the connection between the motor control unit 15 and the motor driving unit 3 is cut off. It may be allowed that the input and the output of the cutoff apparatus 7 are connected with each other through a mechanical component such as a relay and that in the case where the cutoff is required, the connection between the motor control unit 15 and the motor driving unit 3 is cut off by turning off the relay.

The motor driving unit 3 in FIG. 1 incorporates the positive-polarity FETs 31 and 33 and the negative-polarity FETs 32 and 34. The positive-polarity FET 31 and the negative-polarity FET 32 are connected in series with each other between the positive-polarity power source and the negative-polarity power source; the connection point is connected with the motor connection terminal 41. The positive-polarity FET 33 and the negative-polarity FET 34 are connected in series with each other between the positive-polarity power source and the negative-polarity power source; the connection point is connected with the motor connection terminal 42. The motor connection terminals 41 and 42 are connected with the motor 6.

### <Wrong-Output Abnormality>

There exists neither the case where both the positive-polarity FET 31 and the positive-polarity FET 33 of the motor driving unit 3 are concurrently turned on nor the case where both the negative-polarity FET 32 and the negative-polarity FET 34 thereof are concurrently turned on. It can be determined that such an output is wrong and abnormal. The cutoff apparatus 7 monitors the control signal received from the motor control circuit 20; in the case where the control signal is wrong, the cutoff apparatus 7 determines an abnormality and cuts off the output of the motor control circuit 20, but does not transfer the control signal to the motor driving unit 3.

### <Direct-Connection Excessive-Current Abnormality>

In addition, both the positive-polarity FET 31 and the negative-polarity FET 32 that are connected in series with each other are turned off; alternatively, only one of thereof is turned on and the other thereof is turned off. When both the positive-polarity FET 31 and the negative-polarity FET 32 are concurrently turned on, the motor 6 is not driven, and a large current flows in the positive-polarity FET 31 and the negative-polarity FET 32 that are directly connected with each other between the positive-polarity power source and the negative-polarity power source; thus, the motor driving unit 3 is caused to fail. Similarly, both the positive-polarity FET 33 and the negative-polarity FET 34 that are connected in series with each other are turned off; alternatively, only one of thereof is turned on and the other thereof is turned off. When both the positive-polarity FET 33 and the negative-polarity FET 34 are concurrently turned on, the motor 6 is not driven, and a large current flows in the positive-polarity FET 33 and the negative-polarity FET 34 that are directly connected with each other between the positive-polarity power source and the negative-polarity power source; thus, the motor driving unit 3 is caused to fail.

When the motor control unit 15 is normal, there exists neither the case where both the positive-polarity FET 31 and the negative-polarity FET 32 of the motor driving unit 3 are regularly and concurrently turned on nor the case where both the positive-polarity FET 33 and the negative-polarity FET 34 thereof are concurrently turned on. In such a case, an excessive current caused by the direct connection flows in the motor driving unit; thus, in the case where the motor control unit 15 outputs such a control signal, it is made possible that the cutoff apparatus 7 determines an abnormality caused by a direct-connection excessive current, cuts off the output of the motor control circuit 20, and prevents the motor driving unit 3 from failing.

As described above, by monitoring the control signal outputted by the motor control unit 15, the cutoff apparatus 7 can determine a wrong-output abnormality and a direct-connection excessive-current abnormality that causes a large current to flow, and can cut off the output of the motor control circuit 20 so as to prevent the motor driving unit 3 from failing. In this situation, there are not required a large-scaled circuit such as the interlock circuit 4 in the conventional technology, wiring of a signal line from the computing processing unit 1, wiring of a signal line from the current detection circuit 5 of the motor driving unit 3, the cutoff circuit for the motor control circuit 22, and wiring of a signal line to the cutoff circuit for the motor control circuit 22. The adoption of the cutoff apparatus 7 makes it possible to obtain a motor control apparatus having a cutoff circuit that is effective while suppressing upsizing, weight increase, and cost increase.

Although in FIG. 1, there has been described an example where as the switching device of the motor driving unit, an FET is utilized, it may be allowed that the motor driving unit is configured by use of a bipolar transistor, a thyristor, or a relay.

### <Excessive-Current Abnormality>

With regard to driving of the motor 6, the driving current is often controlled by duty-driving the FETs 31 through 34 of the motor driving unit 3. In this situation, although each of the FETs 31 through 34 repeats on/off-control, the cutoff apparatus 7 can calculate a motor energization current Im from the ON-time of a duty-control period. In the case where the calculated motor energization current Im exceeds a preliminarily determined excessive-current determination value Iov, the cutoff apparatus 7 considers that an excessive current has flowed and then makes an abnormality determination. In the case where the cutoff apparatus 7 makes an excessive-current abnormality determination, the output of the motor control circuit 20 is cut off, so that the motor driving unit 3 and the motor 6 can be prevented from failing.

### <Average-Current Exceeding Abnormality>

Moreover, by accumulating the respective ON-times of the FETs 31 through 34 of the motor driving unit 3 for an average-value calculation time Tav and then dividing the accumulated ON-time by the average-value calculation time Tav, the cutoff apparatus 7 can calculate an average motor energization current Ima for the average-value calculation time Tav. In the case where the average motor energization current Ima exceeds a predetermined average-current excess determination value Iova, the cutoff apparatus 7 considers that an excessive current has continued flowing for the average-value calculation time Tav, determines an abnormality, cuts off the output of the motor control circuit 20, so that the motor driving unit 3 can be prevented from failing. By specifying a determination value satisfying the equation "Iova < Iov", a value smaller than the excessive-current determination value Iov that should not be instantaneously exceeded can be designated as the average-current excess determination value Iova that should not be continuously exceeded. As a result, the motor driving unit 3 and the motor 6 can be prevented from failing and deteriorating due to an overheating state. Each of Iova and Iov may be obtained through a calculation based on the performance of a FET device to be utilized and the impedance and reactance of the motor 6 or can be obtained through an experiment.

As described above, by monitoring the control signal outputted by the motor control unit 15, the cutoff apparatus 7 can calculate the motor energization current Im to be supplied by the motor driving unit 3. In the case where the motor energization current Im exceeds the excessive-current determination value Iov, the cutoff apparatus 7 considers that an excessive current has flowed and then makes an abnormality determination, so that the output of the motor control circuit 20 can be cut off. Moreover, the cutoff apparatus 7 calculates the average motor energization current Ima for the average-value calculation time Tav; in the case where the average motor energization current Ima exceeds the average-current excess determination value Iova, the cutoff apparatus 7 considers that an excessive current has continued flowing for the average-value calculation time Tav and then determines an abnormality, so that the output of the motor control circuit 20 can be cut off. The adoption of the cutoff apparatus 7 makes it possible to obtain a motor control apparatus having a cutoff circuit that requires none of a large-scaled circuit such as the interlock circuit 4, provision of the current detection circuit 5, and wiring of a connection line and that is effective, while suppressing upsizing, weight increase, and cost increase.

### <Hardware Configuration of Control Apparatus>

FIG. 2 is a hardware configuration diagram of a control apparatus 100 according to Embodiment 1. In the present embodiment, the hardware configuration of the control apparatus 100 is applied to the motor control unit 15 and the cutoff apparatus 7 of the motor control apparatus 10. Respective functions of the control apparatus 100 are realized by processing circuits provided in the control apparatus 100. Specifically, as illustrated in FIG. 2, the control apparatus 100 includes, as the processing circuits, a computing processing unit (computer) 90 such as a CPU (Central Processing Unit), storage apparatuses 91 that exchange data with the computing processing unit 90, an input circuit 92 that inputs external signals to the computing processing unit 90, an output circuit 93 that outputs signals from the computing processing unit 90 to the outside, and the like.

It may be allowed that as the computing processing unit 90, an ASIC (Application Specific Integrated Circuit), an IC, a DSP (Digital Signal Processor), an FPGA (Field Programmable Gate Array), each of various kinds of logic circuits, each of various kinds of signal processing circuits, or the like is provided. In addition, it may be allowed that as the computing processing unit 90, two or more computing processing units of the same type or different types are provided and respective processing items are executed in a sharing manner. As the storage apparatuses 91, there are provided a RAM (Random Access Memory) that can read data from and write data in the computing processing unit 90, a ROM (Read Only Memory) that can read data from the computing processing unit 90, a flash memory, and the like. The input circuit 92 is connected with various kinds of sensors and switches and is provided with an A/D converter and the like for inputting output signals from the sensors and the switches to the computing processing unit 90. The output circuit 93 is connected with electric loads and is provided with a driving circuit and the like for converting and outputting a control signal from the computing processing unit 90 to the electric loads.

The computing processing unit 90 runs software items (programs) stored in the storage apparatus 91 such as a ROM and collaborates with other hardware devices in the control apparatus 100, such as the storage apparatus 91, the input circuit 92, and the output circuit 93, so that the respective functions provided in the control apparatus 100 are realized. Setting data items such as a threshold value and a determination value to be utilized in the control apparatus 100 are stored, as part of software items (programs), in the storage apparatus 91 such as a ROM.

It may be allowed that the respective functions included in the control apparatus 100 in FIG. 2 are configured with either software modules or combinations of software and hardware.

It may be allowed that each of the motor control unit 15 and the cutoff apparatus 7 is configured with a separate control apparatus 100. It may be allowed that the motor control unit 15 and the cutoff apparatus 7 are configured as separate modules in one and the same control apparatus. It may be allowed that the cutoff apparatus 7 is not provided with the computing processing unit 90 and the storage apparatus 91 but is configured with only hardware items such as a logic circuit, an amplifier, an integrator, a sampling/hold device, and a comparator.

Hereinafter, there will be explained software processing to be executed in the case where as the hardware configuration of the cutoff apparatus 7 in the motor control apparatus 10 according to Embodiment 1, the configuration of the control apparatus 100 is utilized.

### <Main Processing>

FIG. 3 is a flowchart of main processing executed by the computing processing unit 90 of the cutoff apparatus 7 in the motor control apparatus 10 according to Embodiment 1. The main processing of the control is executed every predetermined time (for example, every 1 ms). In the present embodiment, there has been explained an example where the main processing is executed every predetermined time; however, it may be allowed that the main processing is executed by utilizing, as a trigger, a specific signal such as a rotation-angle signal of the motor.

The computing processing unit 90 starts the processing in the step S301, and executes initialization processing in the step S400. The processing contents of the step S400 are represented in the steps S401 through S419 in FIG. 4.

Next, in the step S500, the computing processing unit 90 executes direct-connection abnormality determination processing and wrong-output abnormality determination processing. The processing contents of the step S500 are represented in the steps S501 through S519 in FIG. 5.

Next, in the step S600, the computing processing unit 90 executes excess-current determination processing. The processing contents of the step S600 are represented in the steps S601 through S619 in FIG. 6.

Next, the computing processing unit 90 executes cutoff processing in the step S700 and ends the processing in the step S309. The processing contents of the step S700 are represented in the steps S701 through S719 in FIG. 7.

### <Initialization Processing>

FIG. 4 is a flowchart representing the contents of the initialization processing. The steps S401 through S419 in FIG. 4 are details of the step S400 of the flowchart in FIG. 3.

The computing processing unit 90 starts the processing in the step S401 and then determines in the step S402 whether or not the present timing is immediately after the power source of the cutoff apparatus 7 has been turned on. In the case where the present timing is immediately after the power source of the cutoff apparatus 7 has been turned on, the computing processing unit 90 executes the steps S403 through S410 and then initializes counters and flags. In the step S403, the computing processing unit 90 clears a direct-connection abnormality counter C_shrt ("0" is set). In the step S404, the computing processing unit 90 clears a wrong-output abnormality counter C_ng. In the step S405, the computing processing unit 90 clears an excessive-current counter C_Iov. In the step S406, the computing processing unit 90 clears an average-current excess counter. In the step S407, the computing processing unit 90 clears a direct-connection abnormality flag f_shrt. In the step S408, the computing processing unit 90 clears a wrong-output abnormality flag f_ng. In the step S409, the computing processing unit 90 clears an excessive-current flag f_Iov. Then, in the step S410, the computing processing unit 90 clears an average-current excess flag f_Iova and ends the processing in the step S419.

In the case where in the step S402, the present timing is not immediately after the power source of the cutoff apparatus 7 has been turned on, the computing processing unit 90 initializes neither the counters nor the flags, and then ends the processing in the step S419.

### <Direct-Connection Abnormality Determination Processing and Wrong-Output Abnormality Determination Processing>

FIG. 5 is a flowchart representing the contents of the direct-connection abnormality determination processing and the wrong-output abnormality determination processing. The flowchart for the steps S501 through S519 represents the details of the step S500 of the flowchart in FIG. 3.

The computing processing unit 90 starts the processing in the step S501 and determines in the step S502 whether or not the control signal outputted by the motor control unit 15 is a signal for concurrently turning on the FET 31 and the FET 32. In the case where the control signal outputted by the motor control unit 15 is a signal for concurrently turning on the FET 31 and the FET 32, the signal is an abnormal signal for making the FET 31 and the FET 32 directly connect the positive-polarity power source and the negative-polarity power source of the motor driving unit 3 and causes a direct-connection excessive current, the step S502 is followed by the step S510, where the direct-connection abnormality counter C_shrt is incremented; then, in the step S519, the processing is ended.

In the case where in the step S502, the control signal is not a signal for concurrently turning on the FET 31 and the FET 32, the step S502 is followed by the step S503. In the step S503, it is determined whether or not the control signal outputted by the motor control unit 15 is a signal for concurrently turning on the FET 33 and the FET 34. In the case where the control signal outputted by the motor control unit 15 is a signal for concurrently turning on the FET 33 and the FET 34, it is determined that there exists a direct-connection abnormality; then, the step S503 is followed by the step S510. In the case where the control signal outputted by the motor control unit 15 is not a signal for concurrently turning on the FET 33 and the FET 34, the step S503 is followed by the step S505.

In the step S505, it is determined whether or not the control signal outputted by the motor control unit 15 is a signal for turning on any one of the FET 31 and the FET 33. In the case where the control signal outputted by the motor control unit 15 is a signal for turning on any one of the FET 31 and the FET 33, the step S505 is followed by the step S506. In the case where both the FET 31 and the FET 33 are off, the step S505 is followed by the step S507.

In the step S506, it is determined whether or not the control signal is a signal for turning on any one of the FET 32 and the FET 34. In the case where the control signal outputted by the motor control unit 15 is a signal for turning on any one of the FET 32 and the FET 34, it is determined that no abnormality exists; then, the step S506 is followed by the step S508. In the case where the control signal is a signal for turning off all of the FET 32 and the FET 34, it is determined that a wrong-output abnormality exists, because although a current is poured into the motor 6, no current is sucked out of the motor; in the step S511, the wrong-output abnormality counter C_ng is incremented; then, in the step S519, the processing is ended.

In the step S507, it is determined whether or not the control signal is a signal for turning on any one of the FET 32 and the FET 34. In the case where the control signal is a signal for turning on any one of the FET 32 and the FET 34, it is determined that a wrong-output abnormality exists, because the signal is for the state where although no current is poured into the motor 6, a current is sucked out of the motor; then, the step S507 is followed by the step S511. In the case where the control signal is a signal for turning off all of the FET 32 and the FET 34, it is determined that no abnormality exists; then, the step S507 is followed by the step S508.

In the step S508, the direct-connection abnormality counter C_shrt is cleared. In the step S509, the wrong-output abnormality counter C_ng is cleared. Then, the processing is ended in the step S519.

### <Excess-Current Determination Processing>

FIG. 6 is a flowchart representing the contents of the excess-current determination processing. The flowchart for the steps S601 through S619 represents the details of the step S600 of the flowchart in FIG. 3.

In the step S601, the processing is started; in the step S602, the motor energization current Im to be supplied by the motor driving unit 3 is calculated from the control signal outputted by the motor control unit 15. With regard to driving of the motor 6, the driving current is often controlled by duty-driving the FETs 31 through 34 of the motor driving unit 3. In this situation, although each of the FETs 31 through 34 repeats on/off-control, the cutoff apparatus 7 can calculate the motor energization current Im from the ON-time of a duty-control period. In the step S603, the newest calculated motor energization current Im(n) is stored in the storage apparatus 91. The main processing is executed every millisecond; thus, by sequentially storing the motor energization currents obtained every millisecond Im(1), Im(2), Im(3), ---, Im(n), an average motor energization current Ima, which is the average value of the motor energization current Im per average-value calculation time Tav can be obtained. The storage areas can circulatively be utilized by use of a ring buffer as the storage apparatus 91; thus, the averaging processing can be implemented within a limited storage area. With regard to the averaging, the moving average in the immediately previous average-value calculation time Tav is obtained each time the processing is executed (every millisecond). Alternatively, an interval average value may be obtained every average-value calculation time Tav.

Next, in the step S 604, it is determined whether or not the motor energization current Im is larger than the excessive-current determination value Iov. In the case where the motor energization current Im is larger than the excessive-current determination value Iov, the step S 604 is followed by the step S608, where the excessive-current counter C_Iov is incremented; then, the processing is ended in the step S619.

In the case where the motor energization current Im is not larger than the excessive-current determination value Iov, the step S 604 is followed by the step S605. In the step S605, the motor energization current Im in the immediately previous average-value calculation time Tav is accumulated and then is divided by the average-value calculation time Tav, so that the average motor energization current Ima is calculated. In this example, the average motor energization current Ima is calculated through moving averaging or through interval averaging during the average-value calculation time Tav. However, the average motor energization current Ima may be calculated every average-value calculation time Tav through a first-order lag calculation utilizing the equation "Ima(n) ← K × Im + (1-K) × Ima(n-1)". Here, K is a constant (0 < K < 1); the present average motor energization current Ima(n) is obtained every average-value calculation time Tav, by use of the immediately previous average motor energization current Ima(n-1) and the newest motor energization current Im. The necessary memory usage amount in the storage apparatus 91 can be reduced by utilizing the first-order lag calculation.

Next, in the step S 606, it is determined whether or not the average motor energization current Ima is larger than the average-current excess determination value Iova. In the case where the average motor energization current Ima is larger than the average-current excess determination value Iova, the step S 606 is followed by the step S609, where the average-current excess counter C_Iova is incremented; then, the processing is ended in the step S619.

In the case where in the step S606, the average motor energization current Ima is not larger than the average-current excess determination value Iova, the motor energization current Im is not an excessive current and the average motor energization current Ima does not exceed the average current; therefore, the excessive-current counter C_Iov is cleared in the step S607 and the average-current excess counter C_Iova is cleared in the step S608; then, the processing is ended in the step S619.

### <Cutoff Processing>

FIG. 7 is a flowchart representing the contents of the cutoff processing. The flowchart for the steps S701 through S719 represents the details of the step S700 of the flowchart in FIG. 3.

The processing is started in the step S701; in the step S702, it is determined whether or not the value of the direct-connection abnormality counter C_shrt is larger than a direct-connection abnormality determination time T_shrt. In the case where the value of the direct-connection abnormality counter C_shrt is larger than the direct-connection abnormality determination time T_shrt, a direct-connection abnormality is determined, and the step S702 is followed by the step S706, where the direct-connection abnormality flag f_shrt is set ("1" is inputted). Then, there is set a direct-connection abnormality storage flag f_shrtM, which is not cleared in the initialization processing, provided in a nonvolatile storage apparatus. After that, in the step S710, the motor driving unit 3 is cut off from the motor control unit 15; then, the processing is ended in the step S719.

In the case where in the step S702, the value of the direct-connection abnormality counter C_shrt is not larger than the direct-connection abnormality determination time T_shrt, the step S702 is followed by the step S703. In the step S703, it is determined whether or not the value of the wrong-output abnormality counter C_ng is larger than a wrong-output abnormality determination time T_ng. In the case where the value of the wrong-output abnormality counter C_ng is larger than a wrong-output abnormality determination time T_ng, a wrong-output abnormality is determined, and the step S703 is followed by the step S707. In the step S707, the wrong-output abnormality flag f_ng is set. Then, there is set a wrong-output abnormality storage flag f_ngM, which is not cleared in the initialization processing, provided in a nonvolatile storage apparatus; then, the step S707 is followed by the step S710.

In the case where in the step S703, the value of the wrong-output abnormality counter C_ng is not larger than the wrong-output abnormality determination time T_ng, the step S703 is followed by the step S704. In the step S704, it is determined whether or not the value of the excessive-current counter C_Iov is larger than an excessive-current determination time T_Iov. In the case where the value of the excessive-current counter C_Iov is larger than the excessive-current determination time T_Iov, an excessive-current determination is settled, and the step S704 is followed by the step S708. In the step S708, the excessive-current flag f_Iov is set. Then, there is set an excessive-current storage flag f_IovM, which is not cleared in the initialization processing, provided in an nonvolatile storage apparatus; then, the step S708 is followed by the step S710.

In the case where in the step S704, the value of the excessive-current counter C_Iov is not larger than the excessive-current determination time T_Iov, the step S704 is followed by the step S705. In the step S705, it is determined whether or not the value of the average-current excess counter C_Iova is larger than an average-current excess time T_Iova. In the case where the value of the average-current excess counter C_Iova is larger than the average-current excess time T_Iova, an average-current excess determination is settled, and the step S705 is followed by the step S709. In the step S709, the average-current excess flag f_Iova is set. Then, there is set an average-current excess storage flag f_IovaM, which is not cleared in the initialization processing, provided in a nonvolatile storage apparatus; then, the step S709 is followed by the step S710.

In the case where in the step S705, the value of the average-current excess counter C_Iova is not larger than the average-current excess time T_Iova, the step S705 is followed by the step S719, where the processing is ended. As far as the respective values of the direct-connection abnormality determination time T_shrt, the wrong-output abnormality determination time T_ng, the excessive-current determination time T_Iov, and the average-current excess time T_Iova are concerned, a time suitable for determining each of the respective abnormalities can be set through an experiment or a desktop calculation.

Such a configuration makes it possible to realize the function of the cutoff apparatus 7 by means of software. As a result, it is made possible to obtain the effective cutoff apparatus 7, while suppressing the motor control apparatus 10 from being upsized, increasing its weight, and increasing its cost. In addition, in the case where when the cutoff processing is executed, flags indicating the causes of the cutoffs are stored in a nonvolatile storage apparatus, the postliminary investigation is facilitated.

### 2. Embodiment 2

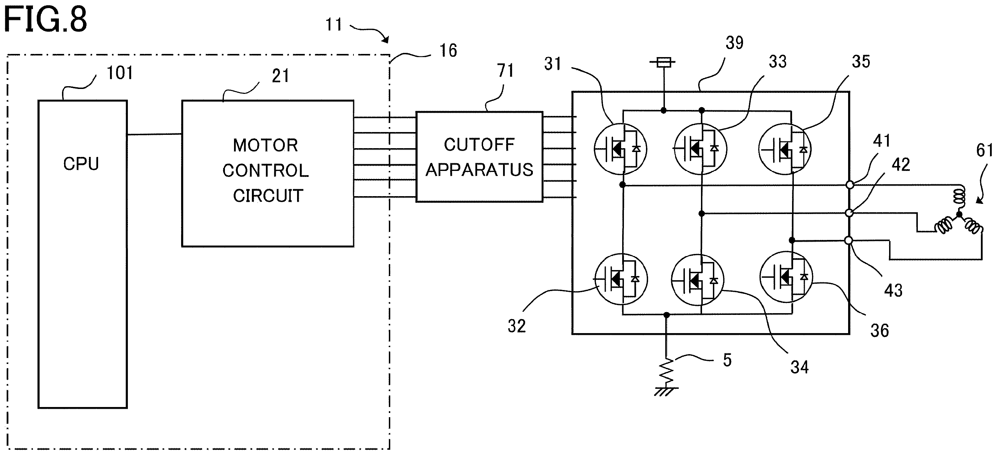

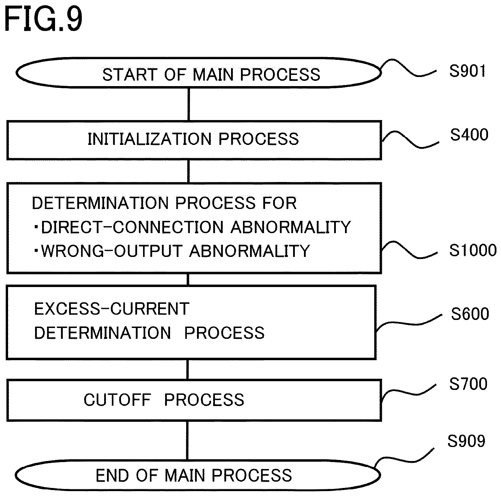

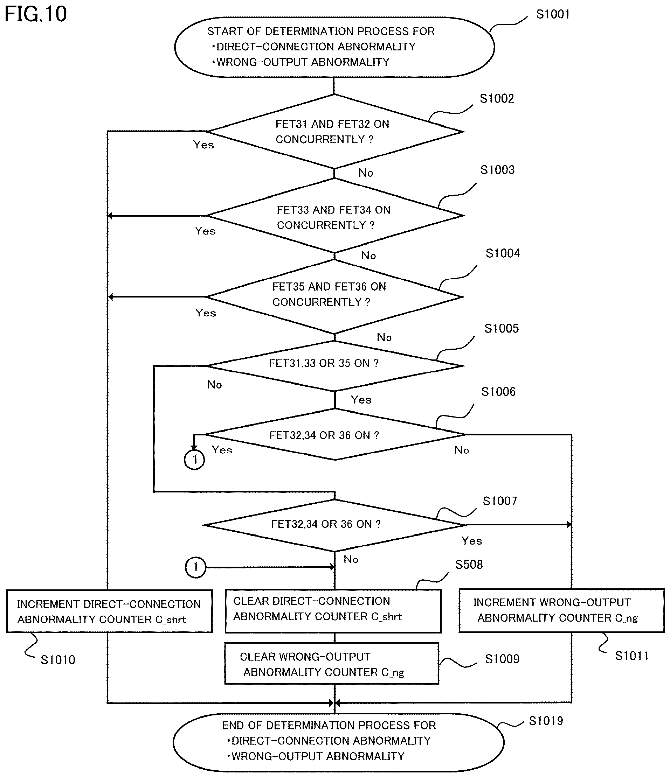

A motor control apparatus 11 according to Embodiment 2 will be explained with reference to the drawings. FIG. 8 is a configuration diagram of the motor control apparatus 11 according to Embodiment 2. FIG. 9 is a flowchart of main processing by a cutoff apparatus 71 in the motor control apparatus 11 according to Embodiment 2. FIG. 10 is a flowchart of short-circuit determination processing and wrong-output determination processing by the cutoff apparatus 71 in the motor control apparatus 11 according to Embodiment 2.

### <Configuration>

In Embodiment 1, the motor 6 connected with the two connection terminals 41 and 42 has been exemplarily represented; however, the number of the connection terminals to be connected with the motor is not limited to two. In Embodiment 2, as shown in FIG. 8, there is represented an example where the motor control apparatus 11 is applied to the three-phase AC motor 61 connected with three connection terminals 41, 42, and 43. In contrast to the configuration diagram in FIG. 1, in FIG. 8, a motor driving unit 39 has six FETs 31 through 36 and currents are supplied to the three-phase AC motor 61 through the three connection terminals 41, 42, and 43. In response to a command from the computing processing unit 101, a motor control circuit 21 outputs a control signal to the six FETs 31 through 36.

The cutoff apparatus 71 is provided between a motor control unit 16 and the motor driving unit 39 and outputs the control signal, received from the motor control unit 16, to the motor driving unit 39. The cutoff apparatus 71 detects various kinds of abnormalities from the control signal and cuts off the motor driving unit 39 from the motor control unit 16 at a time when an abnormality exists.

There will be explained software processing to be executed at a time when the configuration of the control apparatus 100 is applied to the configuration of the cutoff apparatus 71.

### <Main Processing>

FIG. 9 is a flowchart of main processing executed by the computing processing unit 90 of the cutoff apparatus 71 in the motor control apparatus 11 according to Embodiment 2. The main processing of the control is executed every predetermined time (for example, every 1 ms). In the present embodiment, there has been explained an example where the main processing is executed every predetermined time; however, it may be allowed that the main processing is executed by utilizing, as a trigger, a specific signal such as a rotation-angle signal of the motor.

The computing processing unit 90 starts the processing in the step S901, and executes initialization processing in the step S400. The processing contents of the step S400 are the same as those in Embodiment 1 and are represented in the steps S401 through S419 in FIG. 4.

Next, in the step S1000, the computing processing unit 90 executes direct-connection abnormality determination processing and wrong-output abnormality determination processing. The processing contents of the step S1000 are represented in the steps S1001 through S1019 in FIG. 10.

Next, in the step S600, the computing processing unit 90 executes excess-current determination processing. The processing contents of the step S600 are the same as those in Embodiment 1 and are represented in the steps S601 through S619 in FIG. 6.

Next, the computing processing unit 90 executes cutoff processing in the step S700 and ends the processing in the step S909. The processing contents of the step S700 are the same as those in Embodiment 1 and are represented in the steps S701 through S719 in FIG. 7.

### <Direct-Connection Abnormality Determination Processing and Wrong-Output Abnormality Determination Processing>

FIG. 10 is a flowchart representing the contents of the direct-connection abnormality determination processing and the wrong-output abnormality determination processing. The flowchart for the steps S1001 through S1019 represents the details of the step S1000 of the flowchart in FIG. 9.

The flowchart in FIG. 10 is different from the flowchart in FIG.5 according to Embodiment 1 in that the step S1004 is added to the steps S501 through S519 because the number of the FETs has increased from 4 to 6 and in that the number of the FETs in each of the steps S1005, S1006, and S1007 has increased by 1 from the number of the FETs in each of the steps S505, S506, and S507.

The computing processing unit 90 starts the processing in the step S1001 and determines in the step S1002 whether or not the control signal outputted by the motor control unit 16 is a signal for concurrently turning on the FET 31 and the FET 32. In the case where the control signal outputted by the motor control unit 15 is a signal for concurrently turning on the FET 31 and the FET 32, the signal is an abnormal signal for making the FET 31 and the FET 32 directly connect the positive-polarity power source and the negative-polarity power source of the motor driving unit 3 and causes a direct-connection excessive current, the step S1002 is followed by the step S1010, where the direct-connection abnormality counter C_shrt is incremented; then, in the step S1019, the processing is ended.

In the case where in the step S1002, the control signal is not a signal for concurrently turning on the FET 31 and the FET 32, the step S1002 is followed by the step S1003. In the step S1003, it is determined whether or not the control signal outputted by the motor control unit 16 is a signal for concurrently turning on the FET 33 and the FET 34. In the case where the control signal outputted by the motor control unit 16 is a signal for concurrently turning on the FET 33 and the FET 34, it is determined that there exists a direct-connection abnormality; then, the step S1003 is followed by the step S1010. In the case where the control signal outputted by the motor control unit 16 is not a signal for concurrently turning on the FET 33 and the FET 34, the step S1003 is followed by the step S1004.

In the case where in the step S1003, the control signal is not a signal for concurrently turning on the FET 33 and the FET 34, the step S1003 is followed by the step S1004. In the step S1004, it is determined whether or not the control signal outputted by the motor control unit 16 is a signal for concurrently turning on the FET 35 and the FET 36. In the case where the control signal outputted by the motor control unit 16 is a signal for concurrently turning on the FET 35 and the FET 36, it is determined that there exists a direct-connection abnormality; then, the step S1004 is followed by the step S1010. In the case where the control signal outputted by the motor control unit 16 is not a signal for concurrently turning on the FET 35 and the FET 36, the step S1004 is followed by the step S1005.

In the step S1005, it is determined whether or not the control signal outputted by the motor control unit 16 is a signal for turning on any one of the positive-polarity FETs 31, 33 and 35. In the case where the control signal outputted by the motor control unit 16 is a signal for turning on any one of the FETs 31, 33, and 35, the step S1005 is followed by the step S1006. In the case where all of the FETs 31, 33, and 35 are off, the step S1005 is followed by the step S1007.

In the step S1006, it is determined whether or not the control signal is a signal for turning on any one of the FETs 32, 34, and 36. In the case where the control signal outputted by the motor control unit 16 is a signal for turning on any one of the FETs 32, 34, and 36, it is determined that no abnormality exists; then, the step S1006 is followed by the step S1008. In the case where the control signal is a signal for turning off all of the FETs 32, 34, and 36, it is determined that a wrong-output abnormality exists; then, in the step S1011, the wrong-output abnormality counter C_ng is incremented; after that, the processing is ended in the step S1019.

In the step S1007, it is determined whether or not the control signal is a signal for turning on any one of the FETs 32, 34, and 36. In the case where the control signal is a signal for turning on any one of the FETs 32, 34, and 36, it is determined that a wrong-output abnormality exists; then, the step S1007 is followed by the step S1011. In the case where the control signal is a signal for turning off all of the FETs 32, 34, and 36, it is determined that no abnormality exists; then, the step S1007 is followed by the step S1008.

In the step S1008, the direct-connection abnormality counter C_shrt is cleared. In the step S1009, the wrong-output abnormality counter C_ng is cleared. Then, the processing is ended in the step S1019.

As described above, the case where the motor 61 is a three-phase AC motor has been explained. Even when the motor is connected with terminals, the number of which is other than two or three, of the motor driving unit, even when the motor has phases, the number of which is other than two or three, or even when the motor is not an AC motor but a DC motor, the control-signal abnormality determination and the cutoff processing by the cutoff apparatus according to the present disclosure can be utilized.

### 3. Embodiment 3

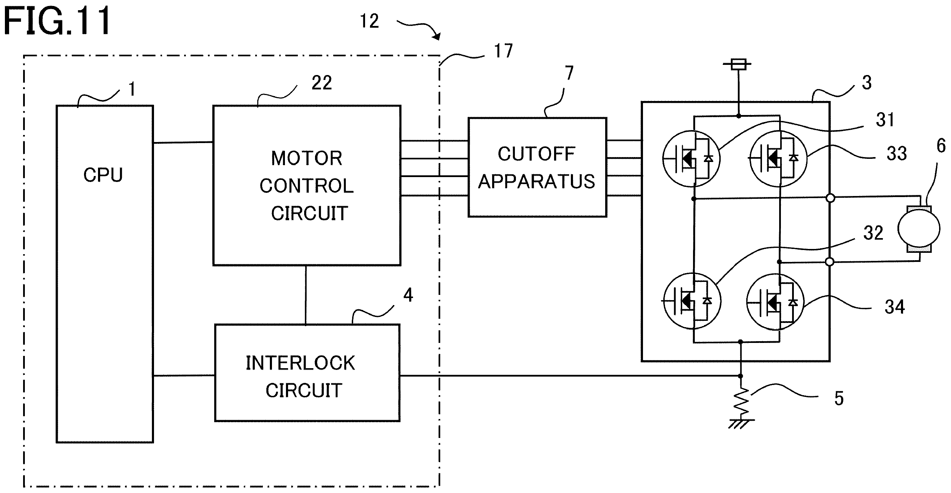

A motor control apparatus 12 according to Embodiment 3 will be explained with reference to the drawings. FIG. 11 is a hardware configuration diagram of the motor control apparatus 12 according to Embodiment 3.

FIG. 11 represents a configuration where the cutoff apparatus 7 is added to the motor control apparatus 13 in FIG. 13 according to the conventional example. The hardware configuration in FIG. 11 is different from the conventional example in that the cutoff apparatus 7 is provided between the motor driving unit 3 and the motor control unit 17 having the interlock circuit 4.

The configuration of the conventional example is not changed but only the cutoff apparatus 7 is added thereto, so that the redundancy of the cutoff function is expanded for an abnormality in the motor control apparatus. Such a configuration makes it possible to perform double monitoring with regard to detection of an abnormality in the motor control apparatus 12 and cutoff of the motor control apparatus 12. As described above, the cutoff apparatus 7 can additionally be provided without changing the existing motor control apparatus; thus, this method is very significant because the redundancy can readily be expanded in a small-scale, lightweight, and low-cost manner.

### 4. Embodiment 4

FIG. 12 is a configuration diagram of an electric power steering apparatus 150 according to Embodiment 4. In FIG. 12, there will be explained an example in which the motor control apparatus 10 and the motor 6 are applied to the electric power steering apparatus 150 to be mounted in a vehicle. The electric power steering apparatus 150 in FIG. 12 is an example of a rack-type electric power steering apparatus. Even when instead of the motor control apparatus 10, the motor control apparatus 11 or 12 is utilized in the electric power steering apparatus 150 according to Embodiment 4, the same effect is provided.

When a driver makes the steering mechanism of a vehicle generate steering torque by means of a steering wheel 151, a torque sensor 152 detects the steering torque and then outputs it to the motor control apparatus 10. In addition, a speed sensor 153 detects the traveling speed of the vehicle and then outputs it to the motor control apparatus 10. Based on the inputs from the torque sensor 152 and the speed sensor 153, the motor control apparatus 10 drives the motor 6 so as to generate auxiliary torque for supplementing the steering torque and then supplies it to the steering mechanism of front wheels 154 of the vehicle. In FIG. 1, illustration of the torque sensor 152 and the speed sensor 153 is omitted. It may be allowed that the motor control apparatus 10 generates auxiliary torque based on inputs other than the inputs from the torque sensor 152 and the speed sensor 153.

The motor control apparatus 10 to be applied to an electric power steering apparatus can suppress itself from being upsized, increasing its weight, and increasing its cost, while performing effective cutoff processing at a time when an abnormality exists; thus, the motor control apparatus 10 can contribute to downsizing, weight saving, and cost reduction of the whole electric power steering apparatus.

### Description of Reference Numerals

3, 39: motor driving unit
4: interlock circuit
5: current detection circuit
6, 61: motor
7, 71: cutoff apparatus
10, 11, 12, 13: motor control apparatus
15, 16, 17: motor control unit
31, 32, 33, 34, 35, 36: FET
150: electric power steering apparatus

## Claims

1. A motor control apparatus (10) comprising:
a motor (6);
a motor driving unit (3) comprising:
two or more positive-polarity switching devices (31,33) connected with a positive-polarity side of a DC power source,
two or more negative-polarity switching devices (32,34) connected with a negative-polarity side of the DC power source, and
an output terminal (41,42) provided for each connection point at which one of the positive-polarity switching devices (31,33) and one of the negative-polarity switching devices (32,34) are connected in series with each other,
wherein the motor driving unit (3) is configured to supply a current to the motor (6) through the output terminals (41,42);
a motor control unit (15) configured to transmit a control signal that controlls the current supplied by the motor driving unit (3) through duty control that turns on and off each of the positive side switching element and the negative side switching element of the motor drive unit (3); and
a cutoff apparatus (7) disposed between the motor control unit (15) and the motor driving unit (3)
**characterized in that** the cutoff apparatus (7) is configured to calculate a current value flowing from the motor driving unit (3) to the motor (6) based on the on time of the duty control cycle of the control signal, and cut off the control signal transmitted from the motor control unit (15) to the motor driving unit (3), when a calculated current value exceeds an excessive-current determination value.

2. The motor control apparatus (10) according to claim 1, wherein the cutoff apparatus (7) is configured to
calculate a value of a current that flows in the motor driving unit (3), based on the control signal from the motor control unit (15), and
cut off the control signal, when an average value of calculated current values exceeds an average excessive-current determination value.

3. The motor control apparatus (10) according to claim 1 or 2,
wherein when a state where the control signal concurrently turns on one of the positive-polarity switching devices (31,33) and one of the negative-polarity switching devices (32,34) that are connected in series with each other continues for a time exceeding a determination time, the cutoff apparatus (7) is configured to cut off the control signal.

4. The motor control apparatus (12) according to any one of claims 1 through 3, wherein the motor control unit (17) further includes an interlock circuit (4) configured to cut off the control signal transmitted from the motor control unit (17) to the motor driving unit (3), when the control signal deviates from a predetermined range.

5. The motor control apparatus (12) according to claim 4,
wherein the motor driving unit (3) has a current detection circuit (5) for detecting a value of a current flowing in the motor driving unit (3), and
wherein the interlock circuit (4) is configured to cut off the control signal, when the value of the current detected by the current detection circuit (5) exceeds an excessive-current interlock determination value.

6. The motor control apparatus (10) according to any one of claims 1 through 5, wherein the cutoff apparatus (7) is configured to cut off the control signal by use of a semiconductor switch.

7. The motor control apparatus (10) according to any one of claims 1 through 5, wherein the cutoff apparatus (7) is configured to cut off the control signal by use of a mechanical relay.

8. An electric power steering apparatus (150) having the motor control apparatus (10) according to any one of claims 1 through 7.

## Patentansprüche

1. Motorsteuerungsapparat (10), umfassend:
einen Motor (6);
eine Motorantriebseinheit (3), umfassend:
zwei oder mehr positivpolige Schaltvorrichtungen (31, 33), die mit einer positivpoligen Seite einer DC-Leistungsquelle verbunden sind,
zwei oder mehr negativpolige Schaltvorrichtungen (32, 34), die mit einer negativpoligen Seite der DC-Leistungsquelle verbunden sind, und
einen Ausgangsanschluss (41, 42), der für jeden Verbindungspunkt bereitgestellt ist, an dem eine der positivpoligen Schaltvorrichtungen (31, 33) und eine der negativpoligen Schaltvorrichtungen (32, 34) in Reihe miteinander verbunden sind,
wobei die Motorantriebseinheit (3) konfiguriert ist, dem Motor (6) über die Ausgangsanschlüsse (41, 42) einen Strom zuzuführen;
eine Motorsteuerungseinheit (15), die konfiguriert ist, ein Steuerungssignal zu übertragen, das den von der Motorantriebseinheit (3) zugeführten Strom durch eine Taststeuerung steuert, die jedes der positivseitigen Schaltelemente und der negativseitigen Schaltelemente der Motorantriebseinheit (3) ein- und ausschaltet; und
einen Abschaltapparat (7), der zwischen der Motorsteuerungseinheit (15) und der Motorantriebseinheit (3) angeordnet ist
**dadurch gekennzeichnet, dass** der Abschaltapparat (7) konfiguriert ist, einen Stromwert, der von der Motorantriebseinheit (3) zum Motor (6) fließt, basierend auf der Einschaltdauer des Taststeuerungsverhältnis des Steuerungssignals zu berechnen und das von der Motorsteuerungseinheit (15) zur Motorantriebseinheit (3) übertragene Steuerungssignal abzuschalten, wenn ein berechneter Stromwert einen Überstrombestimmungswert überschreitet.

2. Motorsteuerungsapparat (10) gemäß Anspruch 1, wobei der Abschaltapparat (7) konfiguriert ist,
einen Wert eines Stroms, der in der Motorantriebseinheit (3) fließt, basierend auf dem Steuerungssignal von der Motorsteuerungseinheit (15) zu berechnen, und
das Steuerungssignal abzuschalten, wenn ein Durchschnittswert von berechneten Stromwerten einen durchschnittlichen Überstrombestimmungswert überschreitet.

3. Motorsteuerungsapparat (10) gemäß Anspruch 1 oder 2,
wobei, wenn ein Zustand, in dem das Steuerungssignal gleichzeitig eine der positivpoligen Schaltvorrichtungen (31, 33) und eine der negativpoligen Schaltvorrichtungen (32, 34), die in Reihe miteinander verbunden sind, einschaltet, für eine Zeit andauert, die eine Bestimmungszeit überschreitet, der Abschaltapparat (7) konfiguriert ist, das Steuerungssignal abzuschalten.

4. Motorsteuerungsapparat (12) gemäß einem der Ansprüche 1 bis 3, wobei die Motorsteuerungseinheit (17) ferner umfasst: eine Verriegelungsschaltung (4), die konfiguriert ist, das von der Motorsteuerungseinheit (17) an die Motorantriebseinheit (3) übertragene Steuerungssignal abzuschalten, wenn das Steuerungssignal von einem vorbestimmten Bereich abweicht.

5. Motorsteuerungsapparat (12) gemäß Anspruch 4,
wobei die Motorantriebseinheit (3) aufweist: eine Stromerfassungsschaltung (5) zum Erfassen eines Wertes eines in der Motorantriebseinheit (3) fließenden Stroms, und
wobei die Verriegelungsschaltung (4) konfiguriert ist, das Steuerungssignal abzuschalten, wenn der Wert des durch die Stromerfassungsschaltung (5) erfassten Stroms einen Überstromverriegelungsbestimmungswert überschreitet.

6. Motorsteuerungsapparat (10) gemäß einem der Ansprüche 1 bis 5, wobei der Abschaltapparat (7) konfiguriert ist, das Steuerungssignal unter Nutzung eines Halbleiterschalters abzuschalten.

7. Motorsteuerungsapparat (10) gemäß einem der Ansprüche 1 bis 5, wobei der Abschaltapparat (7) konfiguriert ist, das Steuerungssignal unter Nutzung eines mechanischen Relais abzuschalten.

8. Elektrischer Servolenkungsapparat (150) mit dem Motorsteuerungsapparat (10) gemäß einem der Ansprüche 1 bis 7.

## Revendications

1. Un appareil de commande de moteur (10) comprenant :
un moteur (6) ;
une unité d'entraînement de moteur (3) comprenant :
deux dispositifs de commutation à polarité positive ou plus (31, 33) connectés à un côté à polarité positive d'une source d'alimentation de courant continu,
deux dispositifs de commutation à polarité négative ou plus (32, 34) connectés à un côté à polarité négative de la source d'alimentation de courant continu, et
une borne de sortie (41, 42) prévue pour chaque point de connexion auquel l'un des dispositifs de commutation à polarité positive (31, 33) et l'un des dispositifs de commutation à polarité négative (32, 34) sont connectés en série l'un avec l'autre,
dans lequel l'unité d'entraînement de moteur (3) est configurée pour fournir un courant au moteur (6) par l'intermédiaire des bornes de sortie (41, 42) ;
une unité de commande de moteur (15) configurée pour transmettre un signal de commande qui contrôle le courant fourni par l'unité d'entraînement de moteur (3) par le biais d'une commande de rapport qui active et désactive chacun des éléments de commutation de côté positif et de côté négatif de l'unité d'entraînement de moteur (3) ; et
un dispositif de coupure (7) disposé entre l'unité de commande de moteur (15) et l'unité d'entraînement de moteur (3)
**caractérisé en ce que** le dispositif de coupure (7) est configuré pour calculer une valeur de courant circulant de l'unité d'entraînement de moteur (3) au moteur (6) sur la base du temps d'activation du cycle de commande de rapport du signal de commande, et couper le signal de commande transmis de l'unité de commande de moteur (15) à l'unité d'entraînement de moteur (3), lorsqu'une valeur de courant calculée dépasse une valeur de détermination de courant excessif.

2. L'appareil de commande de moteur (10) selon la revendication 1, dans lequel le dispositif de coupure (7) est configuré pour
calculer une valeur d'un courant qui circule dans l'unité d'entraînement de moteur (3), sur la base du signal de commande provenant de l'unité de commande de moteur (15), et
couper le signal de commande, lorsqu'une valeur moyenne de valeurs de courant calculées dépasse une valeur moyenne de détermination de courant excessif.

3. L'appareil de commande de moteur (10) selon la revendication 1 ou 2,
dans lequel, lorsqu'un état dans lequel le signal de commande active simultanément l'un des dispositifs de commutation à polarité positive (31, 33) et l'un des dispositifs de commutation à polarité négative (32, 34) qui sont connectés en série l'un avec l'autre se poursuit pendant une durée dépassant une durée de détermination, le dispositif de coupure (7) est configuré pour couper le signal de commande.

4. L'appareil de commande de moteur (12) selon l'une quelconque des revendications 1 à 3, dans lequel l'unité de commande de moteur (17) comprend en outre un circuit de verrouillage (4) configuré pour couper le signal de commande transmis de l'unité de commande de moteur (17) à l'unité d'entraînement de moteur (3), lorsque le signal de commande s'écarte d'une plage prédéterminée.

5. L'appareil de commande de moteur (12) selon la revendication 4,
dans lequel l'unité d'entraînement de moteur (3) comporte un circuit de détection de courant (5) pour détecter une valeur d'un courant circulant dans l'unité d'entraînement de moteur (3), et
dans lequel le circuit de verrouillage (4) est configuré pour couper le signal de commande, lorsque la valeur du courant détecté par le circuit de détection de courant (5) dépasse une valeur de détermination de verrouillage de courant excessif.

6. L'appareil de commande de moteur (10) selon l'une quelconque des revendications 1 à 5, dans lequel le dispositif de coupure (7) est configuré pour couper le signal de commande à l'aide d'un commutateur à semi-conducteur.

7. L'appareil de commande de moteur (10) selon l'une quelconque des revendications 1 à 5, dans lequel le dispositif de coupure (7) est configuré pour couper le signal de commande à l'aide d'un relais mécanique.

8. Un appareil de direction assistée électrique (150) comportant l'appareil de commande de moteur (10) selon l'une quelconque des revendications 1 à 7.
